# EUROPÄISCHE PATENTANMELDUNG

(11) **EP 3 900 962 A1**
(43) Veröffentlichungstag der Anmeldung: **27.10.2021**
(21) Anmeldenummer: 21169397.3
(22) Anmeldetag: 20.04.2021
(51) Int. Cl.: B60G 9/02, B62D 21/11

(54) **KRAFTFAHRZEUG**

(30) Priorität: 20.04.2020 DE 102020204959
(71) Anmelder: VOLKSWAGEN AG, 38440 Wolfsburg (DE)
(72) Erfinder: Pumplun, Karsten, 38442 Wolfsburg (DE)

(57) **Zusammenfassung**

Ein Kraftfahrzeug (1) umfasst einen Fahrzeugaufbau (2), der im Bereich einer Hinterachse (3) einen Laderaum (4) mit einem Ladeboden (5) aufweist, und eine als Starrachse (10) ausgebildete Hinterachse (3). Die Starrachse (11) umfasst einen Achskörper (11), der sich in Fahrzeugquerrichtung parallel zu einer Radachse (A) erstreckt und an seinen Enden Radträger (12) aufweist, die an diesem starr befestigt oder ausgebildet sind, und einen unteren Längslenker (13) und einem oberen Längslenker (14) je Radseite, die sich jeweils vorwiegend in Fahrzeuglängsrichtung erstrecken und jeweils über ein achskörperseitiges Gelenk (15, 17) schwenkbar an dem Achskörper (11) angekoppelt sind, wobei die achskörperseitigen Gelenke (15) der unteren Längslenker (13) unterhalb der Höhe der Radachse (A) angeordnet sind und die achskörperseitigen Gelenke (17) der oberen Längslenker (14) oberhalb der Höhe der Radachse (A) angeordnet sind, und wobei die unteren Längslenker (13) und die oberen Längslenker (14) jeweils über ein aufbauseitiges Gelenk (16, 18) schwenkbar am Fahrzeugaufbau (2) angelenkt sind, das in Vorwärtsfahrtrichtung des Kraftfahrzeugs (1) vor der Radachse (A) der Starrachse (10) liegt. Die achskörperseitigen Gelenke (15, 17) der oberen Längslenker (14) sind in Fahrzeugquerrichtung seitlich neben dem Laderaum (4) des Kraftfahrzeugs (1) liegend angeordnet.

## Beschreibung

Die Erfindung bezieht sich auf das Gebiet der Kraftfahrzeugtechnik und hier insbesondere auf ein Kraftfahrzeug, umfassend einen Fahrzeugaufbau, der im Bereich einer Hinterachse einen Laderaum mit einem Ladeboden aufweist, und eine als Starrachse ausgebildete Hinterachse mit einem Achskörper, der sich in Fahrzeugquerrichtung parallel zu einer Radachse erstreckt und an seinen Enden Radträger aufweist, die an diesem starr befestigt oder ausgebildet sind, und einem unteren Längslenker und einem oberen Längslenker je Radseite, die sich jeweils vorwiegend in Fahrzeuglängsrichtung erstrecken und jeweils über ein achskörperseitiges Gelenk schwenkbar an dem Achskörper angekoppelt sind, wobei die achskörperseitigen Gelenke der unteren Längslenker unterhalb der Höhe der Radachse angeordnet sind und die achskörperseitigen Gelenke der oberen Längslenker oberhalb der Höhe der Radachse angeordnet sind, und wobei die unteren Längslenker und die oberen Längslenker jeweils über ein aufbauseitiges Gelenk schwenkbar am Fahrzeugaufbau angelenkt sind, das in Vorwärtsfahrtrichtung des Kraftfahrzeugs vor der Radachse der Starrachse liegt.

Hinterachskonstruktionen von Kraftfahrzeugen, insbesondere von Personenkraftfahrzeugen und leichten Nutzfahrzeugen, stellen zumeist einen Kompromiss aus Lastanforderung, Fahrdynamikanforderung und Komfortverhalten unter Berücksichtigung der Herstellungskosten dar.

Gebräuchliche Hinterachstypen in Abgrenzung zu aufwändigeren Mehrlenker-Einzelradaufhängungen sind blattfedergeführte Starrachsen und Halbstarrachsen wie Verbundlenkerachsen und Torsionskurbelachsen.

Starrachsen sind im Vergleich zu Einzelradaufhängungen einfacher und robuster und weisen daher in der Regel geringere Herstellungskosten auf.

Problematisch bei Starrachsen im Vergleich zu Einzelradaufhängungen ist allerdings der in der Regel größere Platzbedarf zwischen dem Achskörper und dem Fahrzeugunterboden des Fahrzeugaufbaus, welcher für den Einfedervorgang der Starrachse benötigt wird. Für einen niedrigen Ladeboden bietet sich eine Starrachse daher nicht ohne weiteres an.

Eine Starrachse in Form einer Doppel-Längslenkerachse ist aus DE 10 2018 207 811 A1 bekannt.

Der vorliegenden Erfindung liegt die Aufgabe zugrunde, den Einsatzbereich einer solchen Doppel-Längslenkerachse zu erweitern.

Diese Aufgabe wird durch ein Kraftfahrzeug gemäß Patentanspruch 1 gelöst. Dieses zeichnet sich dadurch aus, dass die achskörperseitigen Gelenke der oberen Längslenker in Fahrzeugquerrichtung seitlich neben dem Laderaum des Fahrzeugaufbau liegend angeordnet sind.

Die durch die Lage der oberen Längslenker definierte obere Längslenkerebene ist hierbei so positioniert, dass eine flache Bauweise der Starrachse mit tiefen Ladeboden möglich ist.

Aufgrund der weit außen angeordneten oberen Längslenker kann die obere Längslenkerebene trotz eines tiefen Fahrzeugladebodens hoch am Achskörper angebunden werden. Weiterhin sorgt die weit außen angeordnete Anbindung der oberen Längslenker für eine vorteilhafte Abstützung von Momenten um die Hochachse des Fahrzeugs.

Diese erfindungsgemäße Lösung ermöglicht eine kostengünstige und platzsparende Hinterachsbauweise, die hohe Lasten erträgt und ausreichend Möglichkeiten bietet, den besten Kompromiss aus Fahrdynamik und Komfort darzustellen.

Insbesondere wird es hierdurch möglich, unter Verwendung einer Starrachse in Doppellängslenkerkonstruktion einen tiefen Ladeboden zu verwirklichen. Hierdurch kann eine solche Hinterachse besonders vorteilhaft nunmehr auch bei Kompaktvans und leichten Nutzfahrzeugen eingesetzt werden, bei welchen ein niedriger Ladeboden mit möglichst großer Laderaumbreite besonders erstrebenswert ist.

Besondere Ausführungsarten der Erfindung sind Gegenstand weiterer Patentansprüche.

So können beispielsweise die achskörperseitigen Gelenke der oberen Längslenker in Vertikalrichtung zumindest abschnittsweise in einem Bereich oberhalb der Höhe des Ladebodens des Laderaums liegen, um eine hohe Abstützung und damit stabile und robuste Radführung zu bewerkstelligen.

In einer Ausführungsart ist vorgesehen, dass die achskörperseitigen Gelenke der oberen Längslenker jeweils zumindest abschnittsweise innerhalb eines von einer Radfelge eines Fahrzeugrads der Hinterachse umschlossenen Raums liegen. Dies ermöglicht es, zum einem eine möglichst breite Abstützbasis zu erzielen und zum anderen eine besonders große Laderaumbreite im Bereich der Hinterachse bei tiefliegendem Laderaumboden zu verwirklichen.

Hierfür ist es gemäß einer weiteren Ausführungsart ferner von Vorteil, wenn die achskörperseitigen Gelenke der oberen Längslenker in Vertikalrichtung höherliegend angeordnet sind, als die aufbauseitigen Gelenke der oberen Längslenker.

Insbesondere können die aufbauseitigen Gelenke der oberen Längslenker in einem Bereich unterhalb des Laderaums liegen. Bei Betrachtung von oben werden die aufbauseitigen Gelenke der oberen Längslenker folglich vom Laderaum überdeckt.

In einer besonders vorteilhaften Ausführungsart erstrecken sich die oberen Längslenker aus einem Bereich seitlich neben dem Laderaum in einen Bereich, der bei Betrachtung in Vertikalrichtung unterhalb des Laderaums liegt.

Im Hinblick auf eine besonders flache Bauweise der Starrachse ist gemäß einer weiteren Ausführungsart der Erfindung je Radseite ein Schwingungsdämpfer vorgesehen, der an dem Achskörper abgestützt ist, in oder entgegen der Vorwärtsfahrtrichtung geneigt ist und in einem Bereich unterhalb des Laderaums an einem Fahrzeugunterboden des Fahrzeugaufbaus über ein Gelenk angekoppelt ist.

Dabei kann das Gelenk zur Anbindung des Schwingungsdämpfers am Fahrzeugaufbau in Vorwärtsfahrtrichtung vor dem aufbauseitigen Gelenk des oberen Längslenkers liegen.

In einer weiteren besonders vorteilhaften Ausführungsart der Erfindung ist im Hinblick auf eine flache Bauweise der Achskörper je Radseite über eine Schraubenfeder im Bereich unterhalb des Laderaums am Fahrzeugunterboden des Fahrzeugaufbaus, gegebenenfalls an dort angebrachten oder ausgebildeten Konsolen, vertikal abgestützt.

Die Starrachse kann als nichtangetriebene Hinterachse zum Einsatz kommen. Jedoch ist auch ein Antrieb der Fahrzeugräder der Hinterachse möglich. In einer weiteren besonders vorteilhaften Ausführungsart der Erfindung ist dazu je Fahrzeugrad der Hinterachse eine Antriebswelle vorgesehen, die mit einem am Fahrzeugaufbau festgelegten Differenzial antriebsmäßig gekoppelt ist. Durch die Anbindung des Differenzials am Fahrzeugaufbau bleiben die ungefederten Massen gering.

Zur Einschränkung eines Seitenkraftlenkens kann an dem Achskörper ein Wattgestänge angreifen. In einer Ausführungsart der Erfindung ist hierzu ein Panhardstab vorgesehen, der mit einem Ende über ein Gelenk an einem ersten Endbereich des Achskörpers angekoppelt ist und an seinem zweiten Ende in einem dem ersten Endbereich in Fahrzeugquerrichtung gegenüberliegenden Endbereich des Achskörpers am Fahrzeugaufbau gelenkig angekoppelt ist. Etwaige Seitwärtsbewegungen werden durch den Panhardstab aufgefangen, welcher die Querführung der Starrachse übernimmt. Ein Querlenker könnte einen Panhardstab nicht ohne Weiteres ersetzen, da das System dann statisch überbestimmt wäre. Bekannte Starrachsen mit Dreiecksquerlenker sind ohne obere Längslenkerebene ausgeführt, da der Dreiecksquerlenker dann eine Doppelfunktion für die Seitenkraft- und Antriebsmomentabstützung aufweist.

Nachfolgend wird die Erfindung anhand von in der Zeichnung dargestellten Ausführungsbeispielen näher erläutert. Die Zeichnung zeigt in:
- Figur 1: eine schematische Darstellung eines Kraftfahrzeugs nach einem Ausführungsbeispiel der Erfindung,
- Figur 2: eine räumliche Ansicht einer ersten Ausführungsvariante der Hinterachse des Kraftfahrzeugs gemäß Fig. 1,
- Figur 3: eine Ansicht der Hinterachse gemäß Fig. 2 von hinten, d.h. in Blickrichtung entgegen der Vorwärtsfahrtrichtung des Kraftfahrzeugs,
- Figur 4: eine räumliche Ansicht einer zweiten Ausführungsvariante der Hinterachse des Kraftfahrzeugs gemäß Fig. 1, und in
- Figur 5: eine Ansicht der Hinterachse gemäß Fig. 2 von hinten, d.h. in Blickrichtung entgegen der Vorwärtsfahrtrichtung des Kraftfahrzeugs.

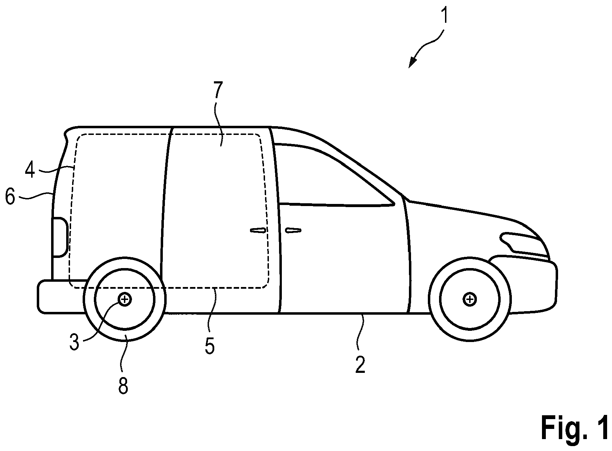

Das Ausführungsbeispiel in Fig. 1 zeigt ein Kraftfahrzeug 1 in Form eines Kompaktvans oder leichten Nutzfahrzeugs.

Dieses Kraftfahrzeug 1 umfasst einen Fahrzeugaufbau 2, der im Bereich seiner Hinterachse 3 einen Laderaum 4 mit einem Ladeboden 5 aufweist. Der Laderaum 4 ist über eine Heckklappe oder -tür 6 sowie gegebenenfalls auch über eine Seitentür 7 zugänglich.

Das Kraftfahrzeug 1 umfasst ferner eine Hinterachse 3 in Form einer Starrachse 10 bzw. 110. Diese Starrachse 10 bzw. 110 ist vorliegend als Doppel-Längslenkerachse mit einem Achskörper und je Radseite zwei Längslenkern ausgeführt. Der Achskörper einer solchen Starrachse 10 und 110 ist in seinem Aufbau in DE 10 2018 207 811 A1 näher beschrieben, deren diesbezüglicher Offenbarungsgehalt hiermit ausdrücklich in die vorliegende Offenbarung einbezogen wird.

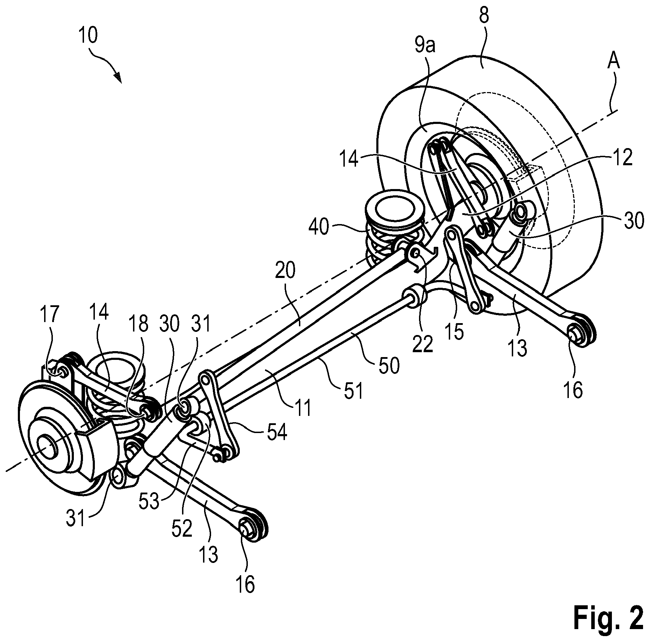

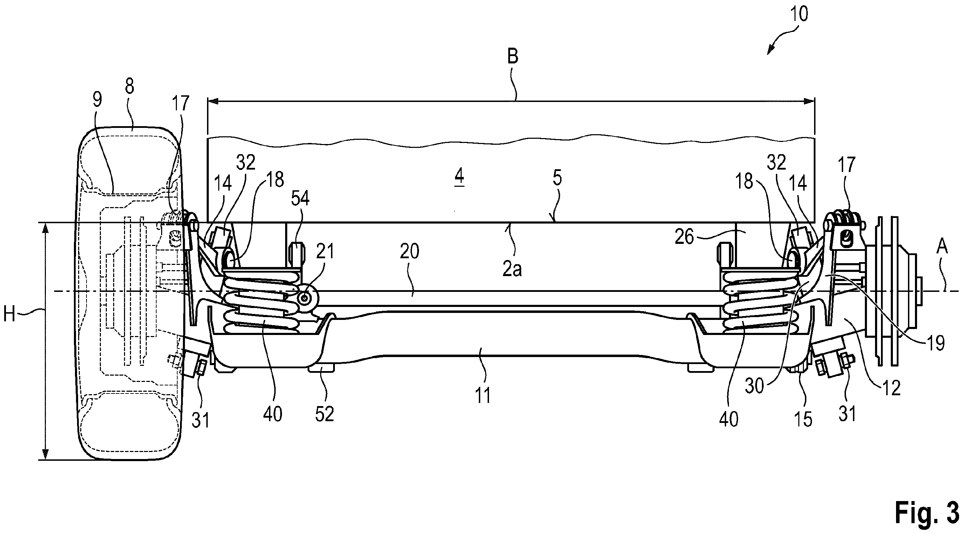

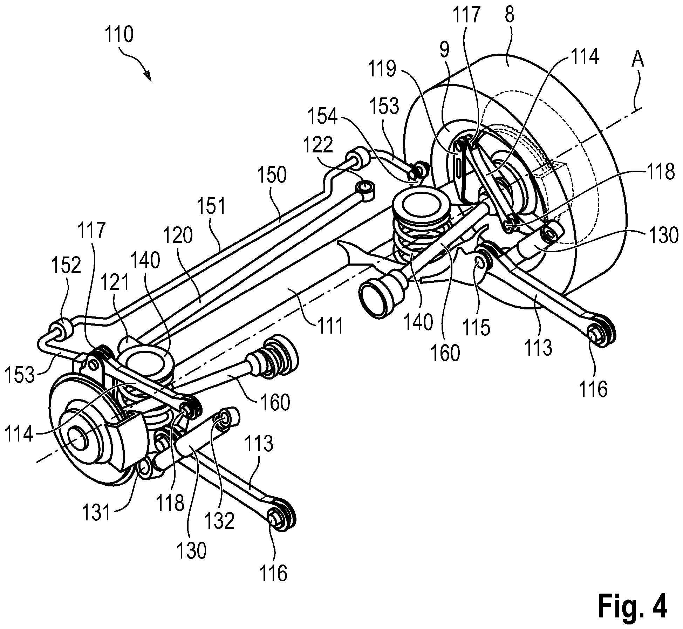

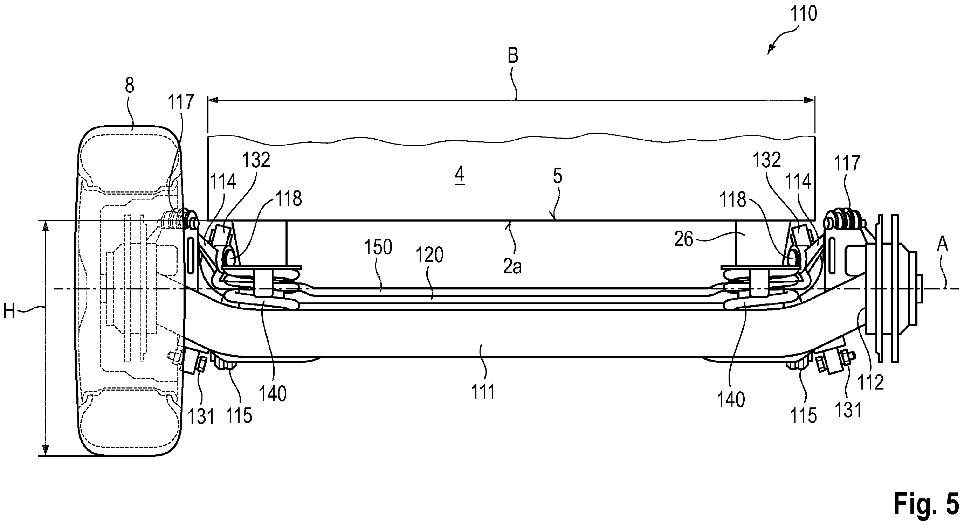

Nachfolgend werden zwei Ausführungsvarianten der Starrachse 10 und 110 näher erläutert. Die erste Ausführungsvariante 10 gemäß den Fig. 2 und 3 bezieht sich dabei auf eine nichtangetriebene Hinterachse, wohingegen die in den Fig. 4 und 5 beispielhaft dargestellte zweite Ausführungsvariante 110 eine angetriebene Hinterachse betrifft.

Die Starrachse 10 gemäß der ersten Ausführungsvariante umfasst zunächst einen Achskörper 11, der sich in Fahrzeugquerrichtung parallel zu einer Radachse A erstreckt. Der Achskörper 11 ist zumindest in einem Mittelabschnitt in seiner Bodenhöhe gegenüber der Radachse A abgesenkt.

Der Achskörper 11 weist an seinen beiden axialen Enden jeweils einen Radträger 12 auf. Jeder Radträger 12 ist an dem restlichen Achskörper starr befestigt, beispielsweise angeschweißt, oder alternativ einstückig mit diesem ausgebildet. Die beiden Radträger 12 dienen jeweils der drehbaren Lagerung eines Fahrzeugrads 8 der Hinterachse 3.

Die Starrachse 10 umfasst weiterhin je Radseite einen unteren Längslenker 13 und einen oberen Längslenker 14. Diese Bezeichnung trägt der Tatsache Rechnung, dass der obere Längslenker 14 insgesamt in Vertikalrichtung höherliegend am Fahrzeug angeordnet ist als der untere Längslenker 13. Sowohl die unteren Längslenker 13 als auch die oberen Längslenker 14 erstrecken sich jeweils vorwiegend in Fahrzeuglängsrichtung.

Gegebenenfalls können diese etwas in Fahrzeugquerrichtung sowie in Fahrzeughochrichtung angewinkelt sein.

Bei dem in den Fig. 2 und 3 gezeigten Ausführungsbeispiel sind die oberen Längslenker 14 in Fahrzeugquerrichtung stärker angewinkelt als die unteren Längslenker 13, vorzugsweise in einem Winkelbereich von 2° bis 15°.

Die unteren Längslenker 13 sind jeweils über ein achskörperseitiges Gelenk 15 schwenkbar an dem Achskörper 11 angekoppelt, der dazu, wie in DE 10 2018 207 811 A1 beschrieben, mit einer entsprechenden Konsole versehen ist.

Dieses achskörperseitige Gelenk 15 des unteren Längslenkers 13 ist unterhalb der Höhe der Radachse A und damit unterhalb der Höhe der Radmitte angeordnet. Ferner ist dieses Gelenk 15 in Bezug auf die Vorwärtsfahrtrichtung vor der Radachse A bzw. vor der Radmitte angeordnet.

Zur Ankopplung des unteren Längslenkers 13 am Fahrzeugaufbau dient ein aufbauseitiges Gelenk 16, das am dem erstgenannten Gelenk 15 gegenüberliegenden Endabschnitt des unteren Längslenkers 13 angeordnet ist und damit in Vorwärtsfahrtrichtung ebenfalls vor der Radachse A liegt.

Sowohl das achskörperseitige Gelenk 15 als auch das aufbauseitige Gelenk 16 des unteren Längslenkers 13 können als elastische Lager, beispielsweise mit Gummi- oder Polymerbuchsen, ausgeführt sein.

Die oberen Längslenker 14, welche eine kürzere Länge als die unteren Längslenker 13 aufweisen, sind jeweils über ein achskörperseitiges Gelenk 17 schwenkbar an dem Achskörper 11 angekoppelt. Dazu ist an dem Achsköper 11 eine nach oben abstehende Konsole 19 befestigt.

Das achskörperseitige Gelenk 17 des oberen Längslenkers 14 ist oberhalb der Höhe der Radachse A und damit oberhalb der Höhe der Radmitte angeordnet. Ferner ist das achskörperseitige Gelenk 17 des oberen Längslenkers 14 in Bezug auf die Vorwärtsfahrtrichtung hinter der Radachse A bzw. hinter der Radmitte angeordnet.

Der Ankopplung des oberen Längslenkers 14 am Fahrzeugaufbau 2 dient ein aufbauseitiges Gelenk 18, das am dem achskörperseitigen Gelenk 17 gegenüberliegenden Endabschnitt des oberen Längslenkers 14 angeordnet ist und damit in Vorwärtsfahrtrichtung vor der Radachse A liegt.

Das aufbauseitige Gelenk 18 des oberen Längslenkers 14 liegt in Vertikalrichtung bevorzugt höher als die Radachse A.

Sowohl das achskörperseitige Gelenk 17 als auch das aufbauseitige Gelenk 18 des oberen Längslenkers 14 können wiederum als elastische Lager, beispielsweise mit Gummi- oder Polymerbuchsen, ausgeführt sein.

Wie insbesondere Fig. 3 entnommen werden kann, liegen die achskörperseitigen Gelenke 17 der oberen Längslenker 14 in Fahrzeugquerrichtung seitlich neben dem Laderaum 4 und damit in Fahrzeugquerrichtung weit außen.

Insbesondere können diesen achskörperseitigen Gelenke 17 der oberen Längslenker 14 jeweils zumindest abschnittsweise innerhalb eines von einer Radfelge 9 eines Fahrzeugrads 8 der Hinterachse umschlossenen Raums liegen, so dass der Ladeboden 5 des Laderaums 4, weil durch die oberen Längslenker 14 unbeeinträchtigt, bezogen auf die Vertikalrichtung sehr tief angeordnet werden kann. Zudem kann der Laderaum 5 hierdurch im Bereich der Hinterachse 3 mit einer großen Breite B ausgeführt werden.

Wie Fig. 3 weiter entnommen werden kann, liegen die achskörperseitigen Gelenke 17 der oberen Längslenker 14 in Vertikalrichtung zumindest abschnittsweise, d.h. ganz oder zumindest teilweise, in einem Bereich oberhalb der Höhe H des Ladebodens 4 des Laderaums 5.

Eine hohe Abstützung des Achskörpers 11 ist für die Antriebsmomentabstützung der Starrachse 10 von Vorteil. In Anbetracht des möglichst tiefliegenden Laderaumbodens 5 werden daher die achskörperseitigen Gelenke 17 der oberen Längslenker 14 in Vertikalrichtung höherliegend angeordnet als die aufbauseitigen Gelenke 18 der oberen Längslenker 14.

Die aufbauseitigen Gelenke 18 der oberen Längslenker 14 können in einem Bereich unterhalb des Laderaums 4 liegen.

Insbesondere können die oberen Längslenker 14 sich jeweils sich aus einem Bereich seitlich neben dem Laderaum 5, d.h. von ihren achsköperseitigen Gelenken 17, in einen Bereich erstrecken, der bei Betrachtung in Vertikalrichtung unterhalb des Laderaums 5 liegt, also in Vertikalrichtung bei Betrachtung von oben durch den Laderaum 5 überdeckt wird.

Etwaige Seitwärtsbewegungen der Starrachse 10 relativ zum Fahrzeugaufbau 2 können durch eine Wattgestänge oder einen Panhardstab 20 eingeschränkt werden. Der Panhardstab 20 ist mit einem Ende über ein erstes Gelenk 21 in einem ersten Endbereich des Achskörpers 11 an dem Achskörper 11 angekoppelt.

An einem zweiten Ende ist der Panhardstab 20 über ein zweites Gelenk 22 am Fahrzeugaufbau 2 angelenkt. Dieses zweite Gelenk 22 ist in einem dem ersten Endbereich in Fahrzeugquerrichtung gegenüberliegenden Endbereich des Achskörpers 11 angeordnet, ohne dort mit dem Achskörper 11 verbunden zu sein.

In dem in Fig. 3 dargestellten Ruhezustand der Starrachse 10 bei stehendem Fahrzeug auf horizontaler Fläche verläuft der Panhardstab 20 im Wesentlichen horizontal in Fahrzeugquerrichtung unterhalb des Fahrzeugunterbodens 2a des Fahrzeugaufbaus.

Weiterhin umfasst die Starrachse 10 je Radseite ein Schwingungsdämpfer 30, der mit einem ersten Endabschnitt über ein erstes Gelenk 31 an dem Achskörper 11 abgestützt ist und wie in Fig. 2 dargestellt stark in Vorwärtsfahrtrichtung zur Vertikalen geneigt ist, jedoch auch stark entgegen der Vorwärtsfahrtrichtung geneigt sein kann. Dies begünstigt ebenfalls eine flache Bauweise der Starrachse 10 und einen tiefliegenden Ladeboden 5.

Das erste Gelenk 31 des Schwingungsdämpfers 30 kann sich wie das achskörperseitige Gelenk 17 zumindest teilweise in den von der Felge 9 umschlossenen Raum hineinerstrecken.

Der Schwingungsdämpfer 30 kann mit seinem zweiten Ende in einem Bereich unterhalb des Laderaums 5 an dem Fahrzeugunterboden 2a des Fahrzeugaufbaus 2 über ein zweites Gelenk 32 angekoppelt werden.

Das zweite Gelenk 32 zur Anbindung des Schwingungsdämpfers 30 am Fahrzeugaufbau 2 in Vorwärtsfahrtrichtung liegt vorzugsweise vor dem aufbauseitigen Gelenk 18 des oberen Längslenkers 14.

Dabei kann das zweite Gelenk 32 des Schwingungsdämpfers 30 in Vertikalrichtung höherliegend als das achskörperseitige Gelenk 17 des oberen Längslenkers 14 angeordnet sein.

Das zweite Gelenk 32 des Schwingungsdämpfers liegt vorzugsweise in Vorwärtsfahrtrichtung hinter dem aufbauseitigen Gelenk 16 des unteren Längslenkers 13.

Das aufbauseitige Gelenk 16 des unteren Längslenkers 13 liegt in Vertikalrichtung deutlich niedriger als das aufbauseitige Gelenk 18 des oberen Längslenkers 14 und auch niedriger als das aufbauseitig angeordnete zweite Gelenk 32 des Schwingungsdämpfers 30.

Die Starrachse 10 umfasst weiterhin je Radseite eine Schraubenfeder 40, über welche der Achskörper 11 im Bereich unterhalb des Laderaums 4 am Fahrzeugunterboden 2a des Fahrzeugaufbaus 2 vertikal abgestützt ist. Gegebenenfalls können hierzu an dem Fahrzeugunterboden 2 entsprechende Konsolen 2b angebracht oder ausgebildet sein.

Bei der ersten Ausführungsvariante gemäß den Figuren 2 und 3 erfolgt die Abstützung der Schraubenfedern 40 an dem Achskörper 11 hinter der Radachse A Hierzu sind entsprechende Konsolen rückseitig an dem Achskörper 11 befestigt, beispielsweise angeschweißt. Der achskörperseitige Abstützpunkt kann entsprechend tief angeordnet werden. Es ist jedoch auch möglich, eine Abstützung der Schraubenfedern 40 am Achskörper 11 vor der Radachse A vorzunehmen.

Weiterhin kann an der Starrachse 10 ein Stabilisator 50 angeordnet sein, welcher einem Verschränken der Achse entgegenwirkt. Der Stabilisator 50 ist als Drehstabfeder ausgebildet, die mit ihrem Mittelabschnitt 51 über zwei Lager 52 drehbar am Achskörper 11 gelagert ist. U-förmig umgebogene Enden 53 der Drehstabfeder sind über zusätzliche Hebel 54 am Fahrzeugaufbau 2, insbesondere am Fahrzeugunterboden 2a angelenkt.

Der Stabilisator 50 ist vorzugsweise an der der Schraubenfederabstützung gegenüberliegenden Seite des Achskörpers 11, vorliegend beispielhaft an der in Vorwärtsfahrtrichtung weisenden Seite des Achsköpers 11, angeordnet und gelagert.

Vorzugsweise liegen sämtlichen Abstützpunkte der Starrachse 10 am Fahrzeugaufbau 2, mit Ausnahme der achskörperseitigen Gelenke 17 der beiden oberen Längslenker 14, unterhalb des Höhenniveaus H des Ladebodens 5 des Laderaums 4.

Die vorstehend erläuterte Starrachse 10 ermöglicht aufgrund ihrer flachen Bauweise in Kombination mit einer hohen Abstützung des Achskörpers 11 durch die oberen Längslenker 14 einen Laderaum 5 mit besonders tiefliegendem Ladeboden 4 und großer Laderaumbreite im Bereich der Hinterachse unter Gewährleistung hoher Traglasten bei einem guten Kompromiss aus Fahrdynamik und Komfort.

Die zweite Ausführungsvariante in den Fig. 4 und 5 betrifft eine angetriebene Starrachse 110 in Doppel-Längslenkerausführung.

Die Starrachse der zweiten Ausführungsvariante umfasst wiederum einen Achskörper 111, der in Fahrzeugquerrichtung parallel zu einer Radachse A verläuft. Der Achskörper 111 ist zumindest in einem Mittelabschnitt in seiner Bodenhöhe gegenüber der Radachse A abgesenkt und in Fahrzeuglängsrichtung gegenüber der Radachse A nach hinten, d.h. entgegen der Vorwärtsfahrtrichtung versetzt angeordnet.

Der Achskörper 111 weist an seinen beiden axialen Enden jeweils einen Radträger 112 auf. Die beiden Radträger 112 sind jeweils an dem restlichen Achskörper starr befestigt, beispielsweise angeschweißt oder aber alternativ einstückig mit diesem ausgebildet. Die Radträger 112 dienen jeweils der drehbaren Lagerung eines Fahrzeugrads 8.

Die Starrachse 110 umfasst weiterhin je Radseite einen unteren Längslenker 113 und einen oberen Längslenker 114. Sowohl die unteren Längslenker 113 als auch die oberen Längslenker 114 erstrecken sich jeweils vorwiegend in Fahrzeuglängsrichtung. Gegebenenfalls können diese etwas in Fahrzeugquerrichtung sowie in Fahrzeughochrichtung angewinkelt sein.

Bei der in den Fig. 4 und 5 gezeigten Ausführungsvariante sind wie bei der ersten Ausführungsvariante die oberen Längslenker 114 in Fahrzeugquerrichtung stärker angewinkelt als die unteren Längslenker 113 und schließen in einer Horizontalebene mit der Fahrzeuglängsrichtung einen Winkel im Bereich von 2° bis maximal 15° ein.

Die unteren Längslenker 113 sind jeweils über ein achskörperseitiges Gelenk 115 schwenkbar an dem Achskörper 111 angekoppelt, der hierfür mit einer entsprechenden Konsole versehen ist.

Das achskörperseitige Gelenk 115 des unteren Längslenkers 113 ist unterhalb der Höhe der Radachse A und damit unterhalb der Höhe der Radmitte angeordnet. Ferner ist dieses achskörperseitige Gelenk 115 in Bezug auf die Vorwärtsfahrtrichtung vor der Radachse A und damit vor der Radmitte des Fahrzeugrads 8 angeordnet.

Die Ankopplung des unteren Längslenkers 113 am Fahrzeugaufbau 2 erfolgt über ein aufbauseitiges Gelenk 116, das am dem erstgenannten Gelenk 115 gegenüberliegenden Endabschnitt des unteren Längslenkers 113 angeordnet ist und damit bezogen auf die Vorwärtsfahrtrichtung ebenfalls vor der Radachse A liegt.

Sowohl das achskörperseitige Gelenk 115 als auch das aufbauseitige Gelenk 116 des unteren Längslenkers 113 können als elastische Lager, beispielsweise mit Gummi- oder Polymerbuchsen, ausgeführt sein.

Die oberen Längslenker 114 weisen eine kürzere Länge als die unteren Längslenker 113 auf. Sie sind jeweils über ein achskörperseitiges Gelenk 117 schwenkbar an dem Achskörper 111 angekoppelt. Dazu ist an dem Achsköper 111 eine nach oben abstehende Konsole 119 befestigt.

Das achskörperseitige Gelenk 117 des oberen Längslenkers 114 ist oberhalb der Höhe der Radachse A und damit oberhalb der Höhe der Radmitte angeordnet. Ferner ist das achskörperseitige Gelenk 117 des oberen Längslenkers 114 in Bezug auf die Vorwärtsfahrtrichtung hinter der Radachse A und hinter der Radmitte angeordnet.

Zur Ankopplung des oberen Längslenkers 114 am Fahrzeugaufbau 2 ist ein aufbauseitiges Gelenk 118 vorgesehen, das am dem achskörperseitige Gelenk 117 gegenüberliegenden Endabschnitt des vorzugsweise stabförmig ausgebildeten oberen Längslenkers 114 angeordnet ist damit in Vorwärtsfahrtrichtung vor der Radachse A liegt.

Das aufbauseitige Gelenk 118 des oberen Längslenkers 114 liegt in Vertikalrichtung bevorzugt höher als die Radachse A.

Sowohl das achskörperseitige Gelenk 117 als auch das aufbauseitige Gelenk 118 des oberen Längslenkers 114 können wiederum als elastische Lager, beispielsweise mit Gummi- oder Polymerbuchsen, ausgeführt sein.

Wie Fig. 5 entnommen werden kann, liegen die achskörperseitigen Gelenke 117 der oberen Längslenker 114 in Fahrzeugquerrichtung seitlich neben dem Laderaum 4 und damit in Fahrzeugquerrichtung weit außen.

Die achskörperseitigen Gelenke 117 der oberen Längslenker 114 können jeweils zumindest abschnittsweise innerhalb eines von einer Radfelge 9 eines Fahrzeugrads 8 der Hinterachse umschlossenen Raums liegen.

Wie Fig. 5 weiter entnommen werden kann, liegen die achskörperseitigen Gelenke 117 der oberen Längslenker 114 in Vertikalrichtung zumindest abschnittsweise, d.h. ganz oder zumindest teilweise, in einem Bereich oberhalb der Höhe H des Ladebodens 4 des Laderaums 5.

Hierdurch kann der Ladeboden 5 des Laderaums 4 bezogen auf die Vertikalrichtung sehr tief angeordnet werden kann. Zudem kann der Laderaum 5 im Bereich der Starrachse 110 mit einer großen Breite in Fahrzeugquerrichtung ausgeführt werden.

Ferner ist eine hohe Abstützung des Achskörpers 111 für die Antriebsmomentabstützung der Starrachse 110 von Vorteil.

In Anbetracht eines möglichst tiefliegenden Ladebodens 4 des Laderaums 5 werden daher die achskörperseitigen Gelenke 117 der oberen Längslenker 114 in Vertikalrichtung vorzugsweise höherliegend angeordnet als die aufbauseitigen Gelenke 118 der oberen Längslenker 114.

Die aufbauseitigen Gelenke 118 der oberen Längslenker 114 können in einem Bereich unterhalb des Laderaums 4 liegen.

Insbesondere können die oberen Längslenker 114 sich jeweils sich aus einem Bereich seitlich neben dem Laderaum 5, d.h. dem Bereich des achskörperseitigen Gelenks 117, in einen Bereich erstrecken, der bei Betrachtung in Vertikalrichtung unterhalb des Laderaums 5 liegt, also in Vertikalrichtung bei Betrachtung von oben durch den Laderaum 5 überdeckt wird.

Etwaige Seitwärtsbewegungen der Starrachse 110 relativ zum Fahrzeugaufbau 2 können durch einen Panhardstab 120 oder ein Wattgestänge eingeschränkt werden. Bei dem dargestellten Ausführungsbeispiel ist ein Panhardstab 120 vorgesehen, der mit einem Ende über ein erstes Gelenk 121 an einem ersten Endbereich des Achskörpers 111 angekoppelt ist.

An einem zweiten Ende ist der Panhardstab 120 über ein zweites Gelenk 122 am Fahrzeugaufbau angelenkt. Dieses zweite Gelenk 122 ist in einem dem ersten Endbereich in Fahrzeugquerrichtung gegenüberliegenden Endbereich des Achskörpers 111 angeordnet.

Fig. 5 zeigt die Starrachse 10 in einem Ruhezustand bei stehendem Fahrzeug auf horizontaler Fläche. In diesem Ruhezustand verläuft der Panhardstab 120 im Wesentlichen horizontal in Fahrzeugquerrichtung unterhalb des Fahrzeugunterbodens 2a des Fahrzeugaufbaus 2.

Weiterhin umfasst die Starrachse 110 je Radseite einen Schwingungsdämpfer 130, der mit einem ersten Endabschnitt über ein erstes Gelenk 131 an dem Achskörper 111 abgestützt ist und wie in Fig. 4 dargestellt stark in Vorwärtsfahrtrichtung zur Vertikalen geneigt ist, jedoch auch stark entgegen der Vorwärtsfahrtrichtung geneigt sein kann. Dies begünstigt eine flache Bauweise der Starrachse 110 sowie einen tiefliegenden Ladeboden 5.

Das erste Gelenk 131 des Schwingungsdämpfers 130 kann sich wie das achskörperseitige Gelenk 117 zumindest teilweise in den von der Felge 9 umschlossenen Raum hineinerstrecken.

Der Schwingungsdämpfer 130 kann mit seinem zweiten Ende in einem Bereich unterhalb des Laderaums 4 an dem Fahrzeugunterboden 2a des Fahrzeugaufbaus 2 über ein zweites Gelenk 132 angekoppelt werden.

Das zweite Gelenk 132 zur Anbindung des Schwingungsdämpfers 130 am Fahrzeugaufbau 2 liegt in Vorwärtsfahrtrichtung vorzugsweise vor dem aufbauseitigen Gelenk 118 des oberen Längslenkers 114.

Dabei kann das zweite Gelenk 132 des Schwingungsdämpfers 130 in Vertikalrichtung höherliegend als das achskörperseitige Gelenk 117 des oberen Längslenkers 114 angeordnet sein.

Das zweite Gelenk 132 des Schwingungsdämpfers liegt in Vorwärtsfahrtrichtung vorzugsweise hinter dem aufbauseitigen Gelenk 116 des unteren Längslenkers 113.

Das aufbauseitige Gelenk 116 des unteren Längslenkers 113 liegt in Vertikalrichtung deutlich niedriger als das aufbauseitige Gelenk 118 des oberen Längslenkers 114 und auch niedriger als das aufbauseitige zweite Gelenk 132 des Schwingungsdämpfers 130.

Die Starrachse 110 der zweiten Ausführungsvariante umfasst weiterhin je Radseite eine Schraubenfeder 140, über welche der Achskörper 111 im Bereich unterhalb des Laderaums 4 am Fahrzeugunterboden 2a des Fahrzeugaufbaus 2 vertikal abgestützt ist. Gegebenenfalls können hierzu an dem Fahrzeugunterboden 2 entsprechende Konsolen 2b angebrachten oder ausgebildet sein.

Bei der zweiten Ausführungsvariante gemäß den Fig. 4 und 5 erfolgt die Abstützung der Schraubenfedern 140 an dem Achskörper 111 hinter der Radachse A. Hierzu sind entsprechende Konsolen vorderseitig, d.h. in Vorwärtsfahrrichtung weisend, an dem Achskörper 111 befestigt, beispielsweise angeschweißt. Der achskörperseitige Abstützpunkt kann entsprechend tief angeordnet werden. Es ist jedoch auch möglich, eine Abstützung der Schraubenfedern 140 am Achskörper 111 an der Rückseite des Achskörpers 111 vorzunehmen.

Weiterhin kann an der Starrachse 110 ein Stabilisator 150 angreifen. Der Stabilisator 150 ist als Drehstabfeder ausgebildet, die mit ihrem Mittelabschnitt 151 über zwei Lager 152 drehbar am Fahrzeugaufbau 2 gelagert ist. U-förmig umgebogene Enden 153 der Drehstabfeder sind, gegebenenfalls unter Zwischenschaltung von zusätzlichen Hebel 154 an Endabschnitten des Achskörpers 111 angelenkt.

Der Stabilisator 150 ist bezogen auf die Vorwärtsfahrtrichtung hinter dem Achsköpers 11 angeordnet.

Vorzugsweise liegen sämtlichen Abstützpunkte der Starrachse 110 am Fahrzeugaufbau 2, mit Ausnahme der achskörperseitigen Gelenke 117 der beiden oberen Längslenker 114, unterhalb des Höhenniveaus H des Ladebodens 5 des Laderaums 4.

Weiterhin ist bei der zweiten Ausführungsvariante gemäß den Fig. 4 und 5 je Fahrzeugrad 8 der Starrachse 110 eine Antriebswelle 160 zum Antreiben des jeweiligen Fahrzeugrads 8 vorgesehen, die mit einem am Fahrzeugaufbau 2 festgelegten vorliegend jedoch nicht näher dargestellten Differenzial antriebsmäßig gekoppelt ist.

Die Antriebswellen 140 verlaufen im Wesentlichen in Fahrzeugquerrichtung und liegen bezogen auf die Vorwärtsfahrtrichtung des Kraftfahrzeugs 1 vor einem Mittelabschnitt des Achskörpers 111 sowie vor den Radfedern 140.

Die vorstehend erläuterte Starrachse 110 ermöglicht aufgrund ihrer flachen Bauweise in Kombination mit einer hohen Abstützung des Achskörpers 111 durch den oberen Längslenker 114 trotz Antriebs der Starrachse 110 einen Laderaum 5 mit besonders tiefliegendem Ladeboden 4 und großer Laderaumbreite im Bereich der Starrachse 110 unter Gewährleistung hoher Traglasten bei einem guten Kompromiss aus Fahrdynamik und Komfort.

Sämtliche oben erwähnten Gelenke können insbesondere als Elastomer-Lager ausgeführt sein. Dies gilt nicht nur wie beschrieben für die Gelenke an den oberen und unteren Längslenkern, sondern ausdrücklich auch für die Gelenke am Panhardstab und am Schwingungsdämpfer.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

- 1: Kraftfahrzeug
- 2: Fahrzeugaufbau
- 2a: Fahrzeugunterboden
- 2b: Konsolen
- 3: Hinterachse
- 4: Laderaum
- 5: Ladeboden
- 6: Heckklappe oder -tür
- 7: Seitentür
- 8: Fahrzeugrad
- 9: Radfelge
- 10: Starrachse
- 11: Achskörper
- 12: Radträger
- 13: unterer Längslenker
- 14: oberer Längslenker
- 15: achskörperseitiges Gelenk des unteren Längslenkers
- 16: aufbauseitiges Gelenk des unteren Längslenkers
- 17: achskörperseitiges Gelenk des oberen Längslenkers
- 18: aufbauseitiges Gelenk des oberen Längslenkers
- 19: Konsole
- 20: Panhardstab
- 21: erstes Gelenk
- 22: zweites Gelenk
- 30: Schwingungsdämpfer
- 31: erstes Gelenk des Schwingungsdämpfers
- 32: zweites Gelenk des Schwingungsdämpfers
- 40: Schraubenfeder
- 50: Stabilisator
- 51: Mittelabschnitt
- 52: Lager
- 53: umgebogenes Ende
- 54: zusätzlicher Hebel
- 110: Starrachse
- 111: Achskörper
- 112: Radträger
- 113: unterer Längslenker
- 114: oberer Längslenker
- 115: achskörperseitiges Gelenk des unteren Längslenkers
- 116: aufbauseitiges Gelenk des unteren Längslenkers
- 117: achskörperseitiges Gelenk des oberen Längslenkers
- 118: aufbauseitiges Gelenk des oberen Längslenkers
- 119: Konsole
- 120: Panhardstab
- 121: erstes Gelenk
- 122: zweites Gelenk
- 130: Schwingungsdämpfer
- 131: erstes Gelenk des Schwingungsdämpfers
- 132: zweites Gelenk des Schwingungsdämpfers
- 140: Schraubenfeder
- 150: Stabilisator
- 151: Mittelabschnitt
- 152: Lager
- 153: umgebogenes Ende
- 154: zusätzlicher Hebel
- 160: Antriebswelle
- A: Radachse
- B: Breite des Laderaums im Bereich der Hinterachse
- H: Höhe des Ladebodens über der Aufstellfläche des Kraftfahrzeugs

## Patentansprüche

1. Kraftfahrzeug (1), umfassend:
einen Fahrzeugaufbau (2), der im Bereich einer Hinterachse (3) einen Laderaum (4) mit einem Ladeboden (5) aufweist, und
eine als Starrachse (10; 110) ausgebildete Hinterachse (3) mit
einem Achskörper (11; 111), der sich in Fahrzeugquerrichtung parallel zu einer Radachse (A) erstreckt und an seinen Enden Radträger (12; 112) aufweist, die an diesem starr befestigt oder ausgebildet sind, und
einem unteren Längslenker (13; 113) und einem oberen Längslenker (14; 114) je Radseite, die sich jeweils vorwiegend in Fahrzeuglängsrichtung erstrecken und jeweils über ein achskörperseitiges Gelenk (15, 17; 115, 117) schwenkbar an dem Achskörper (11; 111) angekoppelt sind, wobei die achskörperseitigen Gelenke (15; 115) der unteren Längslenker (13; 113) unterhalb der Höhe der Radachse (A) angeordnet sind und die achskörperseitigen Gelenke (17; 117) der oberen Längslenker (14; 114) oberhalb der Höhe der Radachse (A) angeordnet sind, und wobei die unteren Längslenker (13; 113) und die oberen Längslenker (14; 114) jeweils über ein aufbauseitiges Gelenk (16, 18; 116, 118) schwenkbar am Fahrzeugaufbau (2) angelenkt sind, das in Vorwärtsfahrtrichtung des Kraftfahrzeugs (1) vor der Radachse (A) der Starrachse (10;110) liegt,
**dadurch gekennzeichnet, dass**
die achskörperseitigen Gelenke (15, 17; 115, 117) der oberen Längslenker (14; 114) in Fahrzeugquerrichtung seitlich neben dem Laderaum (4) des Kraftfahrzeugs (1) liegend angeordnet sind.

2. Kraftfahrzeug (1) nach Anspruch 1, **dadurch gekennzeichnet, dass** die achskörperseitigen Gelenke (15; 115) der oberen Längslenker (14; 114) in Vertikalrichtung zumindest abschnittsweise in einem Bereich oberhalb der Höhe des Ladebodens (5) des Laderaums (4) liegen.

3. Kraftfahrzeug (1) nach Anspruch 1 oder 2, **dadurch gekennzeichnet, dass** die achskörperseitigen Gelenke (15; 115) der oberen Längslenker (14; 114) jeweils zumindest abschnittsweise innerhalb eines von einer Radfelge (9) eines Fahrzeugrads (8) der Hinterachse (3) umschlossenen Raums liegen.

4. Kraftfahrzeug (1) einem der Ansprüche 1 bis 3, **dadurch gekennzeichnet, dass** die achskörperseitigen Gelenke (15; 115) der oberen Längslenker (14; 114) in Vertikalrichtung höherliegend angeordnet sind, als die aufbauseitigen Gelenke (16; 116) der oberen Längslenker (14; 114).

5. Kraftfahrzeug (1) einem der Ansprüche 1 bis 4, **dadurch gekennzeichnet, dass** die aufbauseitigen Gelenke (16; 116) in einem Bereich unterhalb des Laderaums (4) liegen.

6. Kraftfahrzeug (1) einem der Ansprüche 1 bis 5, **dadurch gekennzeichnet, dass** die oberen Längslenker (14; 114) sich aus einem Bereich seitlich neben dem Laderaum (4) in einen Bereich erstrecken, der bei Betrachtung in Vertikalrichtung unterhalb des Laderaums (4) liegt.

7. Kraftfahrzeug (1) einem der Ansprüche 1 bis 6, **dadurch gekennzeichnet, dass** je Radseite ein Schwingungsdämpfer (30; 130) vorgesehen ist, der an dem Achskörper (11; 111) abgestützt ist, in oder entgegen der Vorwärtsfahrtrichtung geneigt ist und in einem Bereich unterhalb des Laderaums (4) an einem Fahrzeugunterboden (2a) des Fahrzeugaufbaus (2) über ein Gelenk (32; 132) angekoppelt ist.

8. Kraftfahrzeug (1) nach Anspruch 7, **dadurch gekennzeichnet, dass** das Gelenk (32) zur Anbindung des Schwingungsdämpfers (30; 130) am Fahrzeugaufbau (2) in Vorwärtsfahrtrichtung vor dem aufbauseitigen Gelenk (16; 116) des oberen Längslenkers (14; 114) liegt.

9. Kraftfahrzeug (1) einem der Ansprüche 1 bis 8, **dadurch gekennzeichnet, dass** der Achskörper (11; 111) je Radseite über eine Schraubenfeder (40; 140) im Bereich unterhalb des Laderaums (4) am Fahrzeugunterboden (2a) des Fahrzeugaufbaus (2), gegebenenfalls dort angebrachten oder ausgebildeten Konsolen (2b), vertikal abgestützt ist.

10. Kraftfahrzeug (1) einem der Ansprüche 1 bis 9, **dadurch gekennzeichnet, dass** je Fahrzeugrad der Hinterachse (3) eine Antriebswelle (160) vorgesehen ist, die mit einem am Fahrzeugaufbau (2) festgelegten Differenzial antriebsmäßig gekoppelt ist.
